# EUROPÄISCHE PATENTSCHRIFT

(11) **EP 1 698 837 B1**
(45) Veröffentlichungstag und Bekanntmachung des Hinweises auf die Patenterteilung: **04.05.2016**
(21) Anmeldenummer: 06001591.4
(22) Anmeldetag: 26.01.2006
(51) Int. Cl.: F24F 12/00, F24F 5/00

(54) **Wärmerückgewinnungssystem mit Nachtkältegewinnung**
Heat recovery system with cold recovery during night time
Système de récupération de chaleur avec récupération du froid dans la nuit

(30) Priorität: 23.02.2005 DE 102005008565
(43) Veröffentlichungstag der Anmeldung: 06.09.2006
(73) Patentinhaber: Heinz Schilling KG, 47906 Kempen (DE)
(72) Erfinder: Schilling, Heinz, 47906 Kempen (DE)
(74) Vertreter: Cohausz Hannig Borkowski Wißgott

(56) Entgegenhaltungen:
- DE-A1- 4 408 087
- DE-U1-202004 014 827
- DATABASE WPI Week 199539 Thomson Scientific, London, GB; AN 1995-301456 XP002484562 & SE 9 304 084 A (LEB-AXRO CONSULT I GOETEBORG AB) 21. Juli 1995 (1995-07-21) & SE 9 304 084 A (LEB AXRO CONSULT I GOETEBORG A [SE]) 21. Juli 1995 (1995-07-21)
- DATABASE WPI Week 199621 Thomson Scientific, London, GB; AN 1996-208071 XP002484563 & SE 9 402 901 A (PREMA AB) 2. März 1996 (1996-03-02) & SE 9 402 901 A (PREMA AB [SE]) 2. März 1996 (1996-03-02)

## Beschreibung

Die Erfindung betrifft ein Wärmerückgewinnungssystem, umfassend wenigstens einen Fortluftwärmetauscher, der in einem Abluftstrom einer lüftungs- und/oder klimatechnischen Anlage, insbesondere eines Gebaudes oder Gebäudeteiles angeordnet ist und wenigstens einen Außenluftwärmetauscher, der in einem Zuluftstrom dieser Anlage angeordnet ist, wobei die Wärmetauscher im Kreislaufverbund stehen.

Im Stand der Technik (SE-9304084) ist es bekannt, lüftungs- und klimatechnische Anlagen, wie sie z.B. bei Gebäuden eingesetzt werden, in der Regel mit Wärmerückgewinnungssystemen auszuführen, wobei die Wärme der verbrauchten Abluft, insbesondere im Winter über ein Wärmetauschersystem entzogen wird und bei Bedarf auf die zu erwärmende Außenluft übertragen wird. Hierzu gibt es verschiedene Systeme. Ein vorteilhaftes System, welches sich durchgesetzt hat, ist das Kreislaufverbundsystem. Hierbei befindet sich ein Wärmetauscher in der Fortluft, der sogenannte Fortluftwärmetauscher zur Aufnahme der Wärme aus der verbrauchten Fortluft und ein Wärmetauscher in der Außenluft, der sogenannte Außenluftwärmetauscher zur Abgabe der aus der Fortluft zurückgewonnenen Wärme. Diese Systeme dienen im Stand der Technik im Wesentlichen ausschließlich der Wärmerückgewinnung.

Als Zusatzfunktion ist z.B. die indirekte adiabate Verdunstungskühlung bekannt, bei der bei einem Kältebedarf zur Kühlung der Außenluft die Abluft/Fortluft im einem Apparat zur Verdunstung von Wasser adiabatisch gekühlt und diese relative Kälte von der Fortluft über das Kreislaufverbundsystem auf die wärmere Außenluft übertragen wird.

Ebenso ermöglichen diese effektiven Wärmetauschersysteme weitere Funktionen, welche in den Wärmetauschern selbst oder im Kreislaufverbundsystem integriert sein könnten, wie z.B. die integrierte wasserseitige Nacherwärmung oder Nachkühlung, ein System zur Entfeuchtungskühlung und Entfeuchtungskälterückgewinnung, die Entnahme der Kälte im Kreislauf zur freien Kühlung, zur Kältemaschinenrückkühlung sowie die Einbindung von natürlich vorhandenen Wärme- und Kältepotentialen in das Kreislaufsystem zum Erwärmen und Kühlen der Luft.

Eine weitere wichtige Funktion zur Energieeinsparung in Lüftungsanlagen ist die sogenannte Nachtkältekühlung, d.h. es wird beispielsweise im Sommer, wenn die Nachttemperaturen deutlich unter den Tagtemperaturen liegen, nachts über die lüftungstechnische Anlagen eine kältere Außenluft direkt in die Räume eines Gebäudes geleitet. Bei einer solchen Nachtkältekühlung kann das eingesetzte Wärmerückgewinnungssystem passiv bleiben, d.h. das Wärmerückgewinnungssystem ist ganz abgeschaltet oder die Wärmerückgewinnungsleistung wird zumindest durch Regelung der Wasserumlaufmenge im Kreislaufverbund reduziert.

Bisher ist es mit vorhandenen Wärmerückgewinnungssystemen nicht möglich, neben einer Nachtkältekühlung mittels der kalten Außenluft insbesondere gleichzeitig auch eine Nachtkältegewinnung zu betreiben, da in einem eingeschalteten Wärmerückgewinnungssystem bei Entzug von Nachtkälte aus dem Kreislaufverbund automatisch wieder Wärme auf die Außenluft/Zuluft aufgeschaltet würde.

Aufgabe der Erfindung ist es demgemäß, ein Wärmerückgewinnungssystem im Kreislaufverbund derart auszugestalten, dass eine Nachtkältegewinnung möglich ist, insbesondere zeitgleich mit einer Nachtkältekühlung, so dass durch die gewonnene Kälte beispielsweise Bauteile separat gekühlt werden können, gegebenenfalls nach Zwischenspeicherung der Kälte oder aber auch die Kälte tagsüber in Spitzenlastzeiten mitverwendet werden kann.

Die Erfindung wird dadurch gelöst, dass bei einem gattungsgemäßen Wärmerückgewinnungssystem mit Kreislaufverbund zur Gewinnung von Kälte aus der Außenluft, insbesondere Nachtkälte, aus dem Kreislaufverbund wenigstens ein Teilkreislauf abtrennbar ist, in dem einer der Wärmetauscher, insbesondere ein Fortluftwärmetauscher angeordnet ist, durch den Außenluft leitbar ist, um das Fluid in diesem Teilkreislauf zu kühlen, wobei der Teilkreislauf wenigstens einen Wärmetauscher aufweist, mit dem die gewonnene Kälte in einen Kühlkreislauf überführbar ist.

Wesentliches Merkmal der Erfindung ist es dementsprechend, ein bestehendes Wärmerückgewinnungssystem im Kreislaufverbund derart auszugestalten, dass der Kreislaufverbund zwischen den beidseitigen Wärmetauschern auftrennbar ist, wodurch sich wenigstens ein Teilkreislauf ergibt, in dem nur einer der Wärmetauscher des Kreislaufverbundes angeordnet ist. Es besteht sodann die Möglichkeit, das Wärmerückgewinnungssystem im Kreislaufverbund bezüglich der Funktion einer Wärmerückgewinnung auszuschalten und nach einer Umschaltung für eine Kältegewinnung zu verwenden.

Hierfür wird die Außenluft, insbesondere im Sommer nachts; durch einen der Wärmetauscher des dann umgeschalteten Teilkreislaufes geführt, um das Fluid im Teilkreislauf zu kühlen und dann die so gewonnene Kälte für andere Aufgaben zur Verfügung stellen zu können. In der hier als erfinderisch beanspruchten Ausführung kann hierfür in dem entstandenen Teilkreislauf ein weiterer Wärmetauscher angeordnet werden, mit dem die gewonnene Kälte aus diesem Teilkreislauf entnommen und weiteren Aufgaben zugeführt werden kann.

Die gewonnene Kälte, die aus dem Teilkreislauf in den Kältekreislauf überführt wurde, kann dementsprechend für die Kühlung z.B. spezieller Bauteile/Baugruppen eingesetzt werden oder aber auch insbesondere nach einer Speicherung in einem Kältespeicher, der in diesem Kühlkreislauf angeordnet sein kann, eingesetzt werden, um in Tagesspitzenlastzeiten eine ergänzende Kühlung z.B. der Räume in einem Gebäude zu ermöglichen.

Ein vorgenannter Kältespeicher kann beispielsweise ausgebildet sein durch ein Behältnis, in dem ein größeres Volumen des gekühlten Fluids bevorratet werden kann, so dass sodann bei einem Kälte- oder Kühlungsbedarf das gekühlte Fluid aus einem unteren Anschluss des Kältespeichers entnommen wird und nach einer Kühlungfunktion das aufgewärmte Fluid in einen oberen Bereich dieses Kältespeichers zurückgeführt wird.

Wesentlich für den zuvor genannten erfindungsgemäßen Aspekt ist es lediglich, dass für eine Kälte-, insbesondere Nachtkältegewinnung, zumindest einer der beiden Wärmetauscher eines Wärmerückgewinnungssystems für diesen Zweck eingesetzt wird. Es können grundsätzlich sowohl der Außenluftwärmetauscher als auch der Fortluftwärmetauscher für diesen Zweck eingesetzt werden.

Im Rahmen der beschriebenen Erfindung ist es wichtig, festzustellen, dass die gewählten Bezeichnungen, wie hier beispielsweise Fortluftwärmetauscher und Außenluftwärmetauscher sich ergeben aufgrund der jeweiligen Funktion dieser Bauteile im Wärmerückgewinnungsbetrieb. Als Außenluftwärmetauscher wird dementsprechend derjenige Wärmetauscher des Kreislaufverbundsystems verstanden, durch den im Wärmerückgewinnungsbetrieb die frische angesaugte Außenluft geführt wird. Unter dem Fortluftwärmetauscher wird derjenige verstanden, durch den im Wärmerückgewinnungsbetrieb die aus dem Gebäude kommende verbrauchte Fortluft geführt wird. Diese Bezeichnung dieser Wärmetauscher wird auch für die nachfolgend weiter beschriebene Kältegewinnungsfunktion beibehalten.

In einer bevorzugten Ausführung der Erfindung kann es vorgesehen sein, dass der bestehende Kreislaufverbund des Wärmerückgewinnungssystems, d.h. der Fluidkreislauf zwischen den beidseitigen Wärmetauschern, auftrennbar ist in zwei Teilkreisläufe, wobei der Fortluftwärmetauscher in dem einen und der Außenluftwärmetauscher in dem anderen Teilkreislauf angeordnet ist und wobei zur direkten Außenlufteinleitung in eine lüftungstechnische und/oder klimatechnische Anlage, z.B. in das Gebäude oder einen Gebäudeteil der Außenluftwärmetauscher von Außenluft durchströmt ist und wobei zur Kältegewinnung aus der Außenluft der Fortluftwärmetauscher von Außenluft durchströmt ist.

Es kann ebenso vorgesehen sein, dass die für eine direkte Nachtkältekühlung in das Gebäude eingeleitete Aussenluft über einen Bypass am Aussenluftwärmetauscher vorbeigeführt wird.

Diese erfindungsgemäßen Ausgestaltungen haben den besonderen Vorteil, dass mit dem bestehenden Wärmerückgewinnungssystem im Kühlbetrieb zwei Funktionen gleichzeitig realisiert werden können, nämlich zum einen die direkte Raum- bzw. Gebäudekühlung durch unmittelbare Einleitung von kalter Außenluft in die Anlage insbesondere durch den Außenluftwärmetauscher oder auch an diesem vorbei, wofür das grundsätzlich bestehende Luftleitungssystem eingesetzt wird.

Zum anderen kann gleichzeitig zum Betrieb der direkten Nachtkältekühlung auch eine Nachtkältegewinnung durchgeführt werden, nämlich dadurch, dass kalte Außenluft durch den Fortluftwärmetauscher geleitet wird und durch das Fluid im Teilkreislauf dieses Wärmetauschers die Kälte der Außenluft entzogen und über den in diesem Teilkreislauf angeordneten weiteren Wärmetauscher dem Kühlkreislauf zugeführt wird.

Es kann dementsprechend z.B. im Sommer nachts eine Gebäudekühlung vorgenommen werden und zum anderen zeitgleich Kälte entweder unmittelbar bedarfsgerecht zur Verfügung gestellt oder aber gespeichert werden, um diese Kälte bei einem Bedarf z.B. tagsüber zur Verfügung zu stellen, entweder ebenso für eine Raumluftkühlung, da die Möglichkeit vorgesehen sein kann, die gespeicherte Kälte über denselben vorgenannten oder einen anderen Wärmetauscher in das dann laufende Kreislaufverbundsystem und somit dem Außenluftwärmetauscher zuzuführen oder aber auch tagsüber bedarfsgerecht anderen Aufgaben zuzuführen, wie beispielsweise einer Bauteilkühlung.

Um diese Möglichkeit der beiden Kältefunktionen, nämlich die Nachtkältekühlung und Nachtkältegewinnung, insbesondere gleichzeitig durchführen zu können, kann es gemäß einer vorteilhaften Ausgestaltung eines erfindungsgemäßen Wärmerückgewinnungssystems vorgesehen sein, die für einen Betrieb zur Wärmerückgewinnung im Kreislaufverbund benötigte Pumpenleistung auf zwei Pumpen aufzuteilen, die jeweils in einem der Teilkreisläufe, auf die für einen Kühlbetrieb umschaltbar ist, angeordnet sind. Hierdurch wird erreicht, dass bei einem Betrieb, bei dem von einer Wärmerückgewinnung des üblichen Kreislaufverbundsystems in einen Kühlbetrieb geschaltet ist, beide bestehende Teilkreisläufe ihre eigenen Pumpen aufweisen, um diese Kreisläufe unabhängig voneinander aufrechtzuerhalten.

Hierbei wird im Wesentlichen im Kühlbetrieb eine Pumpe hauptsächlich für die Kältegewinnung benötigt, um ein Umlauf des Fluids durch den von der Außenluft durchströmten Fortluftwärmetauscher zu gewährleisten. Die Pumpe, die im Teilkreislauf des Außenluftwärmetauschers angeordnet ist, kann z.B. bedarfsmäßig eingesetzt werden, wenn beispielsweise die Außenluft für eine direkte Raumkühlung zu kühl ist und es einer Nacherwärmung bedarf, wofür in dem Teilkreislauf des Außenluftwärmetauschers eine Vorrichtung zur Erwärmung der Aussenluft vorgesehen sein kann. Bei dieser Vorrichtung kann es sich auch um einen Wärmetauscher handeln.

Gerade auch in Verbindung mit dieser genannten bedarfsgerechten Nacherwärmung der insbesondere nachts zugeführten Aussenluft kann der vorgenannte Kältespeicher zum Einsatz kommen.

Durch die bedarfsgerechte insbesondere tagsüber stattfindende Kälteentnahme aus dem Kältespeicher erwärmt sich dieser. Die in dem Kältespeicher sodann gespeicherte Wärme kann in einer bevorzugten Ausführung, z.B. nachts entnommen werden, um diese über das Fluid im Speicher weiteren Aufgaben zuzuführen, insbesondere einzusetzen für eine Erwärmung von Aussenluft, die z.B. nachts zur direkten Nachtkältekühlung in ein Gebäude eingeleitet wird.

Hierfür kann das Fluid aus dem Kältespeicher, der sodann als kombinierter Kälte-/Wärmespeicher arbeitet, einem Wärmetauscher zugeführt werden, der sich im Teilkreislauf des Aussenluftwärmetauschers befindet und als zuvor genannte Vorrichtung zur Erwärmung der Aussenluft dient. So kann durch die Nacherwärmung der Aussenluft eine gewünschte vorgegebene Minimaltemperatur der zugeführten Aussenluft erreicht werden.

Durch diese Nacherwärmung wiederum wird Wärme dem Kälte-/Wärmespeicher entnommen, wodurch sich dieser abkühlt und Kälte gewonnen und gespeichert wird. Die in dem Kältespeicher gespeicherte Kälte kann demnach in einer bevorzugten Ausführung sowohl aus dem Prozeß der Nacherwärmung von Aussenluft bei der direkten Nachtkältekühlung als auch aus dem zuvor beschriebenen Prozeß der Kältegewinnung mittels des Fortluftwärmetauschers stammen.

Bei diesem erfindungsgemäßen Einsatz eines Kälte-/Wärmespeichers kann demnach im Tag-/Nachtbetrieb alternierend Kälte und Wärme gespeichert werden.

Sofern die letzte Funktion entbehrlich erscheint, kann es ebenso vorgesehen sein, dass die Pumpenleistung, die für ein Wärmerückgewinnungssystem benötigt wird, lediglich durch eine einzelne Pumpe realisiert wird, die jedoch in jedem Fall bei einer Umschaltung auf den Kühlbetrieb in dem Teilkreislauf angeordnet ist, der für die Kältegewinnung vorgesehen ist.

In bestehenden Wärmerückgewinnungssystemen ist es üblicherweise vorgesehen, eine Gebläsevorrichtung einzusetzen, um eine Förderung der Luft durch die lüftungstechnische und/oder klimatechnische Anlage, insbesondere eines Gebäudes zu bewirken. Hierbei kann dieses Gebläse beispielsweise stromabwärts eines Fortluftwärmetauschers (der Fortluftwärmetauscher befindet sich an der Saugseite des Gebläses) oder auch stromaufwärts eines Fortluftwärmetauschers (der Fortluftwärmetauscher befindet sich auf der Druckseite des Gebläses) angeordnet sein.

In einer erfindungsgemäßen Ausgestaltung dieser Wärmerückgewinnungssysteme kann es dementsprechend vorgesehen sein, dass stromabwärts des Fortluftwärmetauschers ein Gebläse angeordnet ist, mittels dem Außenluft ansaugbar ist, wobei der angesaugte Außenluftstrom aufteilbar ist in einen ersten Teilstrom, der durch den Außenluftwärmetauscher in die Anlage, z.B. in das Gebäude oder einen Gebäudeteil führt und einen zweiten Teilstrom, der durch den Fortluftwärmetauscher nach außen führt, wobei hier insbesondere das Verhältnis der Aufteilung des Außenluftstroms in die beiden Teilströme einstellbar ist, was durch entsprechende Ventile bzw. Klappen in den jeweiligen Luftkanälen vorgesehen sein kann.

Da bei dem Betrieb des Lüftungssystems mit Wärmerückgewinnungsanlage üblicherweise der von dem Gebläse angesaugte Außenluftstrom vollständig durch das Gebäude und danach durch den Fortluftwärmetauscher geführt wird, kann es sodann zur Realisierung der vorgenannten Merkmale vorgesehen sein, dass der im Kühlbetrieb durch das Gebläse geförderte Teilstrom, der zur direkten Kühlung durch das Gebäude führt, über einen Bypass am Fortluftwärmetauscher vorbeigeführt wird, um zu ermöglichen, dass der Fortluftwärmetauscher ausschließlich durch kalte Außenluft beaufschlagt ist.

In einer anderen erfindungsgemäßen Ausgestaltung kann es ebenso vorgesehen sein, dass stromaufwärts des Fortluftwärmetauschers ein Gebläse angeordnet ist, welches im Wärmerückgewinnungsbetrieb den gesamten Luftstrom fördert und welches im Kühlbetrieb den gesamten zur direkten Gebäudekühlung dienenden Außenluftstrom fördert, wobei dem Fortluftwärmetauscher ein separates Gebläse zugeordnet ist, welches nur den Außenluftstrom zur Kältegewinnung fördert, so dass die beiden Außenluftfördermengen unabhängig voneinander einstellbar sind. Dies erfolgt sodann im Wesentlichen durch eine entsprechende Fördermengenregulierung bei den jeweiligen Gebläsen.

Zwei Ausführungsbeispiele der Erfindung sind in den nachfolgenden Zeichnungen dargestellt. Es zeigen
- Figur 1: eine Lüftungsanlage mit Wärmerückgewinnungssystem im Kühlbetrieb, bei dem ein angesaugter Gesamtaußenluftstrom aufgeteilt wird, einerseits zur direkten Kühlung und andererseits zur Kältegewinnung
- Figur 2: eine Lüftungsanlage mit Wärmerückgewinnungssystem im Kühlbetrieb, bei dem der Außenluftstrom zur direkten Kühlung und der Außenluftstrom zur Kältegewinnung jeweils separate Gebläseeinheiten aufweist

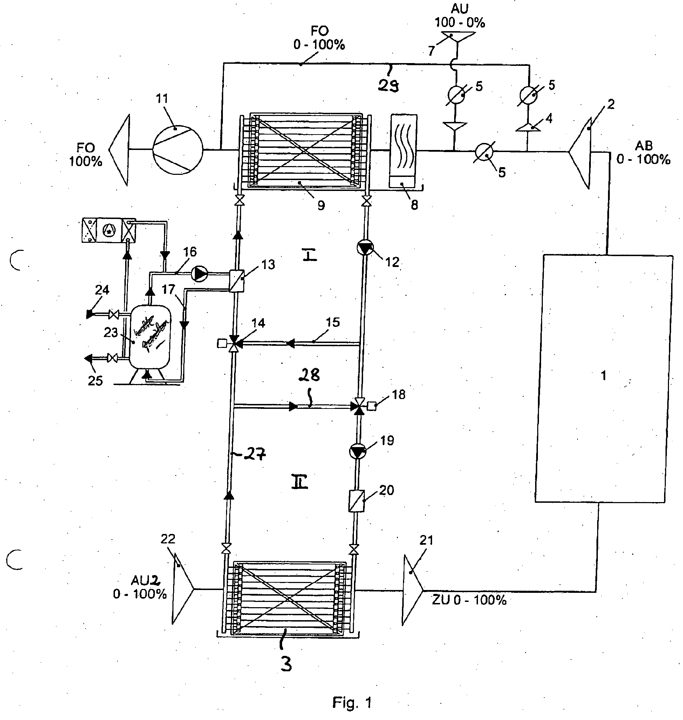

Die Figur 1 zeigt eine Lüftungsanlage mit Wärmerückgewinnungssystem im Kreislaufverbund, bei dem bekanntermaßen ein Fortluftwärmetauscher 9 mit einem Außenluftwärmetauscher 3 im Kreislaufverbund steht, d.h. dass der aus einem Gebäudebereich 1 stammenden Abluft über den Fortluftwärmetauscher 9 die Wärme entziehbar ist, dadurch dass sie auf ein fluides Wärmeträgermedium übertragen wird, wobei dieses die Wärme tragende Fluid mittels den hier dargestellten Pumpen 12 und 19 vermittels des bestehenden Kreislaufverbundes in den Außenluftwärmetauscher 3 geführt wird, um dort die zurückgewonnene Wärme auf die Außenluft 22 zu übertragen. Das hierdurch abgekühlte Fluid wird sodann im Kreislaufverbund zum Fortluftwärmetauscher 9 über die Leitung 27 zurückgeführt.

Während dieses Betriebs wird mittels des hier dargestellten Gebläses 11, welches sich stromabwärts des Fortluftwärmetauschers 9 befindet, die Außenluft 22 angesaugt, durch den Außenluftwärmetauscher 3 in einen Gebäudebereich 1 als Zuluft 21 geführt, wobei sodann die in gleicher Menge aus dem Gebäude stammende Abluft 2 durch den Fortluftwärmetauscher 9 und das Gebläse 11 nach außen geführt wird. Es besteht so gemäß dem Stand der Technik die Möglichkeit, einen üblichen Wärmerückgewinnungsbetrieb im Kreislaufverbund zu ermöglichen.

Gemäß der Erfindung kann dieses bestehende Wärmerückgewinnungssystem umgeschaltet werden, um beispielsweise im Sommerbetrieb nachts einen Kühlbetrieb zu ermöglichen. Hierfür wird beispielsweise zumindest mit dem Dreiwegeventil 14, gegebenenfalls gleichzeitig mit dem Dreiwegeventil 18, der Kreislaufverbund zwischen den beiden Wärmetauschern 3 und 9 aufgelöst, so dass sich in dieser Betriebsweise zum einen ein Teilkreislauf I über die Pumpe 12, die Leitung 15, das Dreiwegeventil 14, den Wärmetauscher 13 zurück zum Wärmetauscher 9 ergibt und zum anderen ein Teilkreislauf II mittels einer Pumpe 19, einen eventuellen Erwärmer/Wärmetauscher 20 durch den Wärmetauscher 3, ein Leitungsbereich 27 und dem Leitungsbereich 28 sowie das Dreiwegeventil 18 zurück zur Pumpe.

Gemäß der Erfindung kann es nunmehr vorgesehen sein, dass der Teilkreislauf I eingesetzt wird, um eine Nachtkältegewinnung zu erreichen. Hierfür wird mittels des Gebläses 11 Außenluft angesaugt, wobei dieser gesamte Außenluftstrom von 100% aufgeteilt wird in einen ersten Teilluftstrom AU1 von 100 - 0% und einen zweiten Teilluftstrom AU2 von 0 - 100%. Das Verhältnis der Teilluftströme zueinander kann hierbei im Wesentlichen durch die Lüftungsklappen 5 geregelt werden.

Es ist hier ersichtlich, dass der Teilluftstrom AU1 von außen angesaugt über das Klappenventil 5 in den Fortluftwärmetauscher 9 gelangt und dort seine mitgeführte Nachtkälte an das Wärmeträgerfluid abgibt, welches sodann über den Teilkreislauf I die Kälte im Wärmetauscher 13 an den Kältekreislauf 16, 17, 23 abgibt. Die sodann in den Kältekreislauf überführte Kälte kann weiteren Aufgaben zugeführt werden, beispielsweise durch die Kreislaufanschlüsse 24 und 25 für eine direkte Bauteilkühlung.

Es kann ebenso vorgesehen sein, mittels des Kältespeichers 23 eine große Menge an Fluid zu kühlen, die bedarfsgerecht, gegebenenfalls auch tagsüber, zur Kühlung verwendet werden kann. Hierbei kann beispielsweise die Kälte auch über den Wärmetauscher 13 oder einen anderen Wärmetasucher in den Kreislaufverbund zurückgeführt werden und über den Außenluftwärmetauscher 3 an die warme Zuluft tagsüber abgegeben werden. Um hier zu verhindern, dass ein Teil der Kälte auch über den Fortluftwärmetauscher 9 direkt nach außen gelangt, kann es in einer Betriebsweise vorgesehen sein, einen Wärmetauscher wie hier dargestellt mit dem Zeichen 13 auch im Kreislauf 2, z.B. als Wärmetauscher 20 vorzusehen, um zu gewährleisten, dass die gespeicherte Kälte nur diesem Kreislauf zugeführt wird. Ebenso kann der Wärmetauscher 13, anders als hier dargestellt im Vorlauf der Pumpen eingesetzt sein, damit bei einer Rückführung der Kälte in das Kreislaufverbundsystem ggfs. über Wärmetauscher 20, die Kälte zunächst in den Aussenluftwärmetauscher gelangt.

Erkennbar ist hier, dass ein Teilstrom der Außenluft AU2 von 0 - 100% direkt durch den Außenluftwärmetauscher 3 in den Gebäudeteil 1 geführt werden kann, wobei in gleicher Menge ein Abluftstrom 2 in der Richtung 4 über das Klappenventil 5 vermittels eines Bypasses 29 am Fortluftwärmetauscher 9 vorbei zum Gebläse 11 geführt wird, so dass sich die beiden Teilströme AU1 und AU2 zu einem Gesamtluftstrom wieder vereinigen.

In der Figur 1 ist es demnach erkennbar, dass mit einem standardmäßig vorgesehenen Wärmerückgewinnungssystem im Kreislaufverbund und den darin vorhandenen Komponenten ein Aufbau realisiert werden kann, bei dem zeitgleich sowohl eine Nachtkältekühlung als auch eine Nachtkältegewinnung und insbesondere Speicherung dieser Kälte vorgenommen werden kann. Hierbei ist es im Wesentlichen der Erfindungskerngedanke, dass der Kreislaufverbund aufgetrennt werden kann, um durch beide Wärmetauscher des Wärmerückgewinnungssystems kalte Außenluft zu führen und diese Kälte unterschiedlichen Einsatzzwecken zuzuführen, einerseit einer direkten Gebäudekühlung und andererseits einer Kältegewinnung/-speicherung.

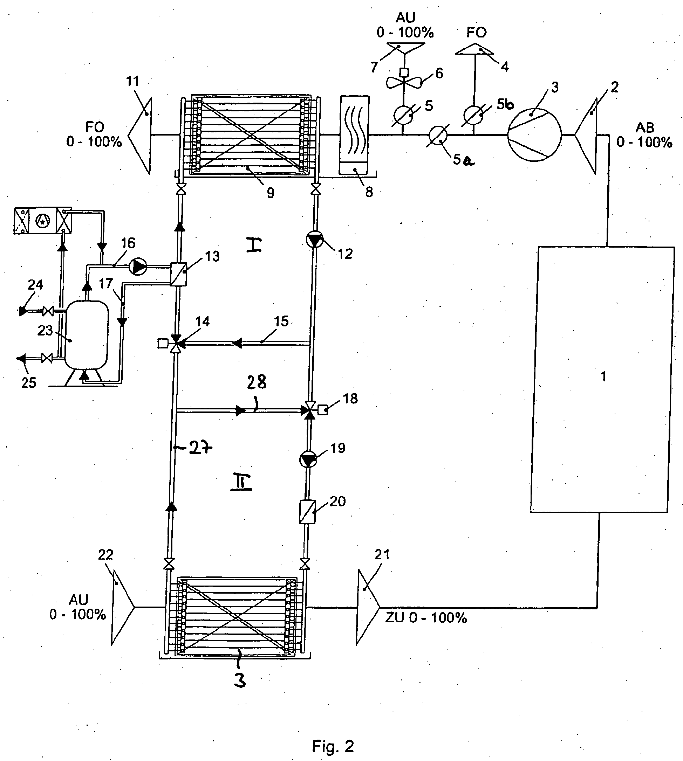

Die Figur 2 zeigt im Wesentlichen wie auch in der Figur 1 dasselbe Wärmerückgewinnungssystem mit den gleichen Komponenten, wobei hier jedoch im Unterschied zur Figur 1 ein Gebläse 3 vorgesehen ist, welches stromaufwärts des Fortluftwärmetauschers angeordnet ist und im Wärmerückgewinnungsbetrieb zu 100% die umlaufende Luftmenge fördert.

Um einen erfindungsgemäßen Kühlbetrieb dieses Wärmerückgewinnungssystems zu ermöglichen, ist es hier gemäß der Figur 2 vorgesehen, zwischen dem Fortluftwärmetauscher 9 und dem Gebläse 3 eine Absperrung 5a vorzusehen, so dass stromabwärts der Absperrung 5a und stromaufwärts des Fortluftwärmetauschers 9 Außenluft 7 in den Fortluftwärmetauscher 9 zugeführt werden kann, die mittels eines separaten Ventilators bzw. Gebläses 6 gefördert wird.

Bei einer Absperrung über das Klappensystem 5a zwischen Gebläse 3 und Fortluftwärmetauscher 9 wird dementsprechend sicher gestellt, dass die von dem Gebläse 3 geförderte Luftmenge unabhängig ist von der Außenluftmenge, die durch das Gebläse 6 gefördert wird. Mittels der von dem Gebläse 6 geförderten Außenluftmenge ist ebenso, wie schon zu der Figur 1 beschrieben, eine Nachtkältegewinnung im Teilkreislauf I nach einer Umschaltung über das Ventil 14 und gegebenenfalls auch über das Dreiwegeventil 18 gegeben.

Es kann so, wie auch in der Figur 1 beschrieben, zeitgleich auch ein direkter Nachtkühlungsbetrieb vorgesehen sein, da gemäß der Figur 2 mittels des Gebläses 3 nunmehr unabhängig Außenluft 22 durch den Außenluftwärmetauscher 3 direkt in die Räume 1 eines Gebäudes gezogen werden kann. Diese frische kühle Zuluft wird sodann in gleicher Menge als aufgewärmte Abluft 2 über das Klappensystem 5b als Fortluft 4 direkt nach außen geführt.

Bei beiden erfindungsgemäßen Ausgestaltungen gemäß der Figur 1 und der Figur 2 kann es vorgesehen sein, im Teilkreislauf 2 jeweils eine Erwärmungsvorrichtung 20 vorzusehen, um gegebenenfalls bei zu kalter Außenluft 22 diese über einen Wärmeaustausch im Außenluftwärmetauscher 3 mit dem geförderten Fluid im Teilkreislauf 2 zu erwärmen und erst dann den Räumen 1 zuzuführen. Bei dieser Erwärmungsvorrichtung kann es sich um einen Wärmetauscher handel, der wie vorgenannt auch in Verbindung mit dem Kälte-/Wärmespeicher 23 eingesetzt werden kann.

Ebenso ist es erkennbar, dass sowohl bei der Ausführung gemäß Figur 1 als auch gemäß Figur 2 stromaufwärts des Fortluftwärmetauschers eine Verdunstungsvorrichtung 8 vorgesehen sein kann, um ergänzend auch eine adiabatische Fortluftkühlung zu erreichen. So kann insbesondere auch im Kühlbetrieb, insbesondere nachts, die zugeführte Aussenluft noch zusätzlich adiabatisch gekühlt werden, um anschließend die Kälte im von dieser Aussenluft 7 durchströmten Fortluftwärmetauscher 9 aus der Aussenluft 7 zu entziehen.

Ebenso kann so mittels der erfindungsgemäßen Ausgestaltung beispielsweise sicher gestellt werden, dass in einem Tagbetrieb der Anlage im gesamten Kreislaufverbund eine Kühlung der Außenluft mittels einer adiabatischen Verdunstungskühlung der Fortluft erfolgt, wobei in einer Spitzenlast weiterhin die Möglichkeit besteht, gespeicherte Kälte aus dem Kältespeicher 23 entweder in das Kreislaufverbundsystem einzuführen oder über die separaten Leitungen 24, 25 dem Gebäude bzw. Bauteilen zuzuführen, die einen Kältebedarf haben.

Deutlich wird bei beiden Ausführungen gemäß Figur 1 und Figur 2 die erfindungsgemäße Möglichkeit, ein bestehendes Wärmerückgewinnungssystem von der Funktion der Wärmerückgewinnung umzuschalten auf eine Funktion des Kühlbetriebes, bei dem sowohl eine direkte Kühlung als auch eine Kältegewinnung und gegebenenfalls Kältespeicherung möglich ist.

## Patentansprüche

1. Wärmerückgewinnungssystem umfassend wenigstens einen Fortluftwärmetauscher (9) für einen Fortluftstrom (11) einer lüftungs- und/oder klimatechnischen Anlage und wenigstens einen Außenluftwärmetauscher (3) für einen Zuluftstrom (22) für diese Anlage, wobei die Wärmetauscher (3,9) im Kreislaufverbund stehen, **dadurch gekennzeichnet, dass** zur Gewinnung von Kälte aus der Aussenluft (7) aus dem Kreislaufverbund wenigstens ein Teilkreislauf (I) abtrennbar ist, in dem ein Fortluftwärmetauscher (9) angeordnet ist, durch den mittels einer Verdunstungsvorrichtung (8) adiabatisch gekühlte Aussenluft (7) leitbar ist, um das Fluid in diesem Teilkreislauf (I) zu kühlen, wobei der Teilkreislauf (I) wenigstens einen Wärmetauscher (13) aufweist, mit dem die gewonnene Kälte in einen Kühlkreislauf (16,17,23) überführbar ist, der einen Kältespeicher (23) aufweist, aus dem gekühltes Fluid bedarfsgerecht entnehmbar ist.

2. Wärmerückgewinnungssystem nach Anspruch 1, **dadurch gekennzeichnet, dass** der Kreislaufverbund auftrennbar ist in zwei Teilkreisläufe (I,II), wobei der Fortluftwärmetauscher (9) in dem einen (I) und der Aussenluftwärmetauscher (3) in dem anderen Teilkreislauf (II) angeordnet ist und wobei zur direkten Aussenlufteinleitung in die Anlage der Aussenluftwärmetauscher (3) von Aussenluft durchströmt ist und wobei zur Kältegewinnung aus der Aussenluft (7) der Fortluftwärmetauscher (9) von Aussenluft (7) durchströmt ist.

3. Wärmerückgewinnungsystem nach Anspruch 2, **dadurch gekennzeichnet, dass** die für einen Betrieb zur Wärmerückgewinnung im Kreislaufverbund benötigte Pumpenleistung auf zwei Pumpen (12,19) aufgeteilt ist, die jeweils in einem der Teilkreisläufe (I,II) angeordnet sind

4. Wärmerückgewinnungsystem nach einem der Ansprüche 2 oder 3, **dadurch gekennzeichnet, dass** im Teilkreislauf (II) des Aussenluftwärmetauschers (3) eine Vorrichtung (20) zur Erwärmung des umlaufenden Fluids angeordnet ist, um im Aussenluftwärmetauscher (3) eine Erwärmung der zugeführten Aussenluft (22) vorzunehmen, insbesondere um eine geforderte Minimaltemperatur einzuhalten.

5. Wärmerückgewinnungsystem nach einem der vorherigen Ansprüche, **dadurch gekennzeichnet, dass** stromabwärts des Fortluftwärmetauschers (9) ein Gebläse (11) angeordnet ist, mittels dem Aussenluft (22,7) ansaugbar ist, wobei der angesaugte Gesamtaussenluftstrom (22,7) aufteilbar ist in einen ersten Teilstrom (22), der durch den Aussenluftwärmetauscher (3) in die Anlage, insbesondere in das Gebäude oder einen Gebäudeteil führt und einen zweiten Teilstrom (7), der durch den Fortluftwärmetauscher (9) nach aussen führt.

6. Wärmerückgewinnungssystem nach Anspruch 5, **dadurch gekennzeichnet, dass** das Verhältnis der Aufteilung des Aussenluftstromes (22,7) in die beiden Teilströme (22,7) einstellbar ist.

7. Wärmerückgewinnungssystem nach Anspruch 5 oder 6, **dadurch gekennzeichnet, dass** der durch die Anlage geführte Teilstrom (22) über einen Bypass (29) am Fortluftwärmetauscher (9) vorbeigeführt ist.

8. Wärmerückgewinnungsystem nach einem der vorherigen Ansprüche, **dadurch gekennzeichnet, dass** stromaufwärts des Fortluftwärmetauschers (9) ein Gebläse (3) angeordnet ist, welches im Wärmerückgewinnungsbetrieb den gesamten Luftstrom (22,11) fördert und welches im Kühlbetrieb den gesamten zur direkten Gebäudekühlung dienenden Aussenluftstrom (22) fördert, wobei dem Fortluftwärmetauscher (9) ein separates Gebläse (6) zugeordnet ist, welches nur den Aussenluftstrom (7) zur Kältegewinnung fördert, so dass die beiden Aussenluftfördermengen (22,7) unabhängig voneinander einstellbar sind.

9. Verfahren zur Kältegewinnung aus der Aussenluft (7) mittels eines Wärmerückgewinnungssystems im Kreislaufverbund, **dadurch gekennzeichnet, dass** die Aussenluft über eine Verdunstungsvorrichtung (8) geleitet wird zur adiabatischen Kühlung der Aussenluft und anschließend durch den Fortluftwärmetauscher (9) geleitet wird, um der Aussenluft (7) die Kälte mittels des Fluids im Fortluftwärmetauscher (9) zu entziehen und in einen Kühlkreislauf (16, 17, 23) zu überführen, wobei ein Wärme-/Kältespeicher (23) im Kühlkreislauf (16, 17, 23) vorgesehen ist, in den gewonnene Kälte gespeichert und bedarfsgerecht gespeicherte Kälte entnommen wird.

10. Verfahren nach Anspruch 9, **dadurch gekennzeichnet, dass** das Überführen über einen Wärmetauscher (13) erfolgt.

11. Verfahren nach Anspruch 9 oder 10, **dadurch gekennzeichnet, dass** der Kreislaufverbund in zwei autarke Teilkreisläufe (I, II) geteilt wird, wobei über den einen Teilkreislauf (I) eine Kältegewinnung erfolgt und wobei mit dem anderen Teilkreislauf (II) eine Kältekühlung über den. Aussenluftwärmetauscher (3) erfolgt.

12. Verfahren nach Anspruch 11, **dadurch gekennzeichnet, dass** eine Nachkältekühlung minimaltemperaturgesteuert/-geregelt erfolgt.

13. Verfahren nach Anspruch 9, **dadurch gekennzeichnet, dass** aus dem Wärme-/Kältespeicher (23) die durch die Kälteentnahme im Speicher (23) gespeicherte Wärme bedarfsgerecht entnommen wird zur Erwärmung der durch den Aussenluftwärmetauscher (3) zugeführen Aussenluft (22), um eine minimal geforderte Zulufttemperatur zu erreichen.

14. Verfahren nach Anspruch 13, **dadurch gekennzeichnet, dass** der Speicher (23) im Tag- und Nachtbetrieb abwechselnd als Kälte- und Wärmespeicher genutzt wird.

## Claims

1. Heat recovery system comprising at least one exhaust air heat exchanger (9) for an exhaust air stream (11) of a ventilation and/or air conditioning installation and at least one outside air heat exchanger (3) for an intake air stream (22) for this installation, the heat exchangers (3, 9) being in a combined circuit, **characterized in that,** in order to obtain cold from the outside air (7) from the combined circuit, at least one part circuit (I) can be separated **in that** there is arranged an exhaust air heat exchanger (9) through which it is possible to convey outside air (7), which has been cooled adiabatically by means of an atomising device (8), in order to cool the fluid in this part circuit (I), the part circuit (I) having at least one heat exchanger (13) by means of which the obtained cold can be transferred into a cooling circuit (16, 17, 23) which has a cold store (23) whence cooled fluid can be drawn as required.

2. Heat recovery system according to Claim 1, **characterized in that** the combined circuit can be split into two part circuits (I, II), wherein the exhaust air heat exchanger (9) is arranged in one (I) and the outside air heat exchanger (3) is arranged in the other (II) part circuit, and wherein, in order to guide outside air directly into the installation, outside air flows through the outside air heat exchanger (3), and wherein, in order to obtain cold from the outside air (7), outside air (7) flows through the exhaust air heat exchanger (9).

3. Heat recovery system according to Claim 2, **characterized in that** the pump power required for operation for heat recovery in the combined circuit is split between two pumps (12, 19), each of which is arranged in one of the part circuits (I, II).

4. Heat recovery system according to either of Claims 2 and 3, **characterized in that,** in the part circuit (II) of the outside air heat exchanger (3), there is arranged a device (20) for heating the circulating fluid in order to heat the supplied outside air (22) in the outside air heat exchanger (3), in particular in order to maintain a required minimum temperature.

5. Heat recovery system according to one of the preceding claims, **characterized in that,** downstream of the exhaust air heat exchanger (9), there is arranged a fan (11) by means of which outside air (22, 7) can be drawn in, wherein the total outside air stream (22, 7) drawn in can be split into a first part stream (22) which leads through the outside air heat exchanger (3) into the installation, in particular into the building or part of the building, and a second part stream (7) which leads out through the exhaust air heat exchanger (9).

6. Heat recovery system according to Claim 5, **characterized in that** the ratio of splitting the outside air stream (22, 7) into the two part streams (22, 7) can be set.

7. Heat recovery system according to Claim 5 or 6, **characterized in that** the part stream (22) fed through the installation can be guided past the exhaust air heat exchanger (9) via a bypass (29).

8. Heat recovery system according to one of the preceding claims, **characterized in that,** upstream of the exhaust air heat exchanger (9), there is arranged a fan (3) which, in heat recovery operation, delivers the entire air stream (22, 11) and which, in cooling operation, delivers all of the outside air stream (22) that serves for direct building cooling, there being assigned to the exhaust air heat exchanger (9) a separate fan (6) which delivers only the outside air stream (7) for obtaining cold, such that the two propelled outside air quantities (22, 7) can be set independently of one another.

9. Method for obtaining cold from the outside air (7) by means of a heat recovery system in the combined circuit, **characterized in that** the outside air is guided via an atomising device (8) for adiabatic cooling of the outside air and is then guided through the exhaust air heat exchanger (9) in order to extract the cold from the outside air (7) by means of the fluid in the exhaust air heat exchanger (9) and to transfer this cold into a cooling circuit (16, 17, 23), there being provided in the cooling circuit (16, 17, 23) a heat/cold store (23) in which obtained cold is stored and stored cold is withdrawn as required.

10. Method according to Claim 9, **characterized in that** the transfer takes place via a heat exchanger (13).

11. Method according to Claim 9 or 10, **characterized in that** the combined circuit is split into two independent part circuits (I, II), wherein cold is obtained via the one part circuit (I) and wherein, with the other part circuit (II), cold cooling takes place via the outside air heat exchanger (3).

12. Method according to Claim 11, **characterized in that** night-time cold cooling takes place controlled in an open- or closed-loop manner on the basis of a minimum temperature.

13. Method according to Claim 9, **characterized in that** the heat stored in the store (23) by means of the cold extraction is withdrawn from the heat/cold store (23) as required for heating the outside air (22) fed through the outside air heat exchanger (3), in order to achieve a minimum required intake air temperature.

14. Method according to Claim 13, **characterized in that** the store (23) is used in day operation and night operation alternately as a cold store and a heat store.

## Revendications

1. Système de récupération de chaleur comprenant au moins un échangeur de chaleur d'air rejeté (9) pour un flux d'air rejeté (11) d'une installation technique d'aération et/ou de climatisation et au moins un échangeur de chaleur d'air extérieur (3) pour un flux d'air amené (22) pour cette installation, les échangeurs de chaleur (3, 9) étant dans l'interconnexion de circuit, **caractérisé en ce que** pour récupérer le froid provenant de l'air extérieur (7), au moins une partie de circuit (I) peut être séparée de l'interconnexion de circuit dans laquelle un échangeur de chaleur d'air rejeté (9) est disposé, l'air extérieur (7) refroidi de façon adiabatique pouvant être conduit à travers ledit échangeur au moyen d'un dispositif d'évaporation (8) pour refroidir le fluide dans cette partie de circuit (I), la partie de circuit (I) comportant au moins un échangeur de chaleur (13) à l'aide duquel le froid capté peut être transféré dans un circuit de refroidissement (16, 17, 23) comportant un accumulateur de froid (23) hors duquel le fluide refroidi peut être restitué en cas de besoin.

2. Système de récupération de chaleur selon la revendication 1, **caractérisé en ce que** l'interconnexion de circuit peut être séparée en deux parties de circuit (1, 11), l'échangeur de chaleur d'air rejeté (9) étant disposé dans une partie de circuit (I) et l'échangeur de chaleur d'air extérieur (3) étant disposé dans l'autre partie de circuit (II) et l'échangeur de chaleur d'air extérieur (3) étant traversé par l'air extérieur pour l'introduction directe d'air extérieur dans l'installation et l'échangeur de chaleur d'air rejeté (9) étant traversé par l'air extérieur (7) pour la récupération de froid provenant de l'air extérieur (7).

3. Système de récupération de chaleur selon la revendication 2, **caractérisé en ce que** la puissance de pompage nécessaire pour un fonctionnement à fin de récupération de chaleur est divisée dans l'interconnexion de circuit en deux pompes (12, 19) respectivement disposées dans une des parties de circuit (I, II).

4. Système de récupération de chaleur selon l'une quelconque des revendications 2 ou 3, **caractérisé en ce qu'**un dispositif (20) de chauffage du fluide en circulation est disposé dans la partie de circuit (II) de l'échangeur de chaleur d'air extérieur (3), pour chauffer l'air extérieur (22) amené dans l'échangeur de chaleur d'air extérieur (3), notamment pour maintenir une température minimale voulue.

5. Système de récupération de chaleur selon l'une quelconque des revendications précédentes, **caractérisé en ce qu'**une soufflerie (11) est disposée en aval de l'échangeur de chaleur d'air rejeté (9), l'air extérieur (22, 7) pouvant être aspiré à l'aide de ladite soufflerie, le flux d'air extérieur total (22, 7) aspiré pouvant être divisé en un premier flux partiel (22) guidé dans l'installation en passant à travers l'échangeur de chaleur d'air extérieur (3), notamment dans le bâtiment ou une partie de bâtiment, et un deuxième flux partiel (7) guidé vers l'extérieur en passant à travers l'échangeur de chaleur d'air rejeté (9).

6. Système de récupération de chaleur selon la revendication 5, **caractérisé en ce que** le rapport de la séparation du flux d'air extérieur (22, 7) en deux flux partiels (22, 7) est réglable.

7. Système de récupération de chaleur selon la revendication 5 ou 6, **caractérisé en ce que** le flux partiel (22) guidé à travers l'installation passe devant l'échangeur de chaleur d'air rejeté (9) via une dérivation (29).

8. Système de récupération de chaleur selon l'une quelconque des revendications précédentes, **caractérisé en ce qu'**une soufflerie (3) est disposée vers l'amont de l'échangeur de chaleur d'air rejeté (9), ladite soufflerie extrayant en fonctionnement de récupération de chaleur la totalité du flux d'air (22, 11) et extrayant en fonctionnement de refroidissement la totalité du flux d'air extérieur (22) servant au refroidissement direct du bâtiment, une soufflerie (6) séparée étant associée à l'échangeur de chaleur d'air rejeté (9), ladite soufflerie n'extrayant que le flux d'air extérieur (7) pour la récupération de froid, de sorte que les deux quantités d'extraction d'air extérieur (22, 7) peuvent être réglées indépendamment l'une de l'autre.

9. Procédé pour la récupération de froid provenant de l'air extérieur (7) à l'aide d'un système de récupération de chaleur dans l'interconnexion de circuit, **caractérisé en ce que** l'air extérieur est guidé via un dispositif d'évaporation (8) pour refroidir de façon adiabatique l'air extérieur avant d'être guidé à travers l'échangeur de chaleur d'air rejeté (9) pour extraire de l'air extérieur (7) le froid à l'aide du fluide, dans l'échangeur de chaleur d'air rejeté (9), et le transférer dans un circuit de refroidissement (16, 17, 23), un accumulateur de chaleur/froid (23) étant prévu dans le circuit de refroidissement (16, 17, 23) dans lequel le froid capté est accumulé et le froid accumulé étant restitué en cas de besoin.

10. Procédé selon la revendication 9, **caractérisé en ce que** le transfert s'effectue via un échangeur de chaleur (13).

11. Procédé selon la revendication 9 ou 10, **caractérisé en ce que** l'interconnexion de circuit est divisé en deux parties de circuit (I, II) autonomes, une récupération de froid se produisant via la première partie de circuit (I) et un refroidissement par le froid se produisant via l'échangeur de chaleur d'air extérieur (3) à l'aide de l'autre partie de circuit (II).

12. Procédé selon la revendication 11, **caractérisé en ce qu'**un refroidissement par le froid nocturne est réglé/commandé par température minimale.

13. Procédé selon la revendication 9, **caractérisé en ce que** la chaleur accumulée par prélèvement de froid dans l'accumulateur (23) est prélevée en cas de besoin hors de l'accumulateur de chaleur/froid (23) pour réchauffer l'air extérieur (22) introduit à travers l'échangeur de chaleur d'air extérieur (3), pour atteindre une température d'amenée d'air voulue minimale.

14. Procédé selon la revendication 13, **caractérisé en ce que** l'accumulateur (23) sert en alternance d'accumulateur de froid/chaleur en fonctionnement jour et nuit.
